# EUROPEAN PATENT APPLICATION

(11) **EP 2 353 983 A1**
(43) Date of publication of application: **10.08.2011**
(21) Application number: 11152516.8
(22) Date of filing: 28.01.2011
(51) Int. Cl.: B62K 3/00

(54) **Bicycle fitting apparatus and method**

(30) Priority: 29.01.2010 US 299606 P
(71) Applicant: Elgevnick LLC, Fenwick Island, DE 19944 (US)
(72) Inventor: Demajistre, Robert, Fenwick Island, DE 19944 (US); Danahy, Kevin, Rehoboth Beach, DE 19971 (US); Grimm, Michael, Altoona, PA 16601 (US)
(74) Representative: Elkiner, Kaya

(57) **Abstract**

A bicycle fitting system includes a wind tunnel, a platform, a load cell, a bicycle rig, a plurality of actuators, and a processor. The platform is disposed within the wind tunnel and includes a rear roller, a front strut, and a rear strut. The load cell is coupled to the platform. The bicycle rig is coupled to the front and rear struts and includes a plurality of adjustment points, a rear wheel, a handle bar, and a seat, with the rear wheel friction coupled to the rear roller. Each adjustment point is associated with one of the actuators, and each actuator is operable to alter a configuration of the bicycle rig. The processor receives an output from the load cell and operates the actuators while a rider is riding the bicycle rig.

## Description

### BACKGROUND OF THE INVENTION

### 1. Priority

Priority is claimed to U.S. Provisional Patent Application Serial No. 61/299,606, filed January 29, 2010. The disclosure of the aforementioned priority document is incorporated herein by reference in its entirety.

### 2. Field of the Invention

The field of the present invention is bicycle fitting to a rider, particularly methods and apparatuses for fitting a racing bicycle to a rider.

### 3. Background

The fitting of a racing bicycle to the rider is well recognized as one of the most important factors contributing to the cyclist's performance, including speed, comfort, endurance, and freedom from injury. There are various accepted methods of bike fitting at varying levels of sophistication. Racing bikes are marketed in various sizes which are designed to fit riders of size ranges. The basic criterion is rider inseam length with capability for adjusting other components such as handle bar height, grip orientation, aerobar orientation, seat height, and seat orientation. Further, a bicycle may be custom built for a rider's specific geometry to optimize performance.

In a typical bicycle fitting, measurements are taken of the rider on the bike in a stationary mode (most typically on a trainer) and the adjustable components of the bicycle are adjusted to within the approximate accepted parameter ranges for the rider. The rider then pedals the bike, and with interaction from a fitter, further adjustments are made to the bicycle so that, at least qualitatively, the bicycle is optimized to a best fit for the rider. More sophisticated fitting systems are available, such as those that employ computerized visualization systems to optimize the fit. Wind tunnels are also employed to evaluate the aerodynamic orientation of the rider in order to further optimize performance. All these systems follow the same basic procedure for fitting the bicycle to the rider: (1) the bicycle is adjusted to initial settings, (2) the rider pedals the bicycle while being monitored for various performance criteria, (3) the rider stops pedaling, and dismounts, (4) adjustments are made to the bicycle, and (5) the rider resumes pedaling and the new adjustments are evaluated based on the performance criteria. The last three steps may continue until the rider and the fitter agree that a proper fit has been achieved. Typically, such a process as above described, requires one to two hours.

### SUMMARY OF THE INVENTION

The present invention is directed toward a system and method for fitting a bicycle to a rider. In the system, a platform is disposed within a wind tunnel, and the platform includes a rear roller and front and rear struts. A load cell is coupled to the platform to enable a measurement of wind drag. A bicycle rig is coupled to the front and rear struts of the platform. The bicycle rig includes a plurality of adjustment points, a rear wheel, a handle bar, and a seat, with the rear wheel being friction coupled to the rear roller. Optionally, the bicycle rig may include a front wheel and the platform may include a front roller, with the front wheel being friction coupled to the front roller and the front roller being configured to rotate based on rotation of the rear roller. A plurality of actuators are also included, with each adjustment point being associated with one of the actuators, and each actuator being configured to alter a configuration of the bicycle rig. A processor is configured to receive an output from the load cell and to operate the actuators while a rider is riding the bicycle rig. Additional options, which are described in greater detail below, may also be incorporated into the system. Any of the various options may be incorporated alone or in combination.

In the method, a bicycle rig is provided mounted to a platform within a wind tunnel, and a load cell is coupled to the platform. The bicycle rig includes a plurality of adjustment points, a handle bar, and a seat. Each adjustment point is associated with an actuator, and each actuator is configured to alter a configuration of the bicycle rig. While the rider rides the bicycle rig, the wind tunnel is activated, output from the load cell is monitored, and one or more of the actuators are operated in response to output from the load cell, thereby altering the configuration of the bicycle rig. The various options described herein with respect to the system may be incorporated into the method, either alone or in combination.

Accordingly, an improved system and method for fitting a bicycle to a rider are disclosed. Advantages of the improvements will appear from the drawings and the description of the preferred embodiment.

### BRIEF DESCRIPTION OF THE DRAWINGS

In the drawings, wherein like reference numerals refer to similar components:
Fig. 1 illustrates a wind tunnel incorporated into a trailer;
Fig. 2 illustrates a bicycle rig;
Figs. 3A & 3B illustrate a detailed view of the lateral seat adjustment for the bicycle rig of Fig. 2;
Figs. 4A & 4B illustrate a detailed view of the rise seat adjustment for the bicycle rig of Fig. 2;
Figs. 5A & 5B illustrate a detailed view of the rise handle bar adjustments for the bicycle rig of Fig. 2; and
Figs. 6A & 6B illustrate a detailed view of the rotational handle bar adjustments for the bicycle rig of Fig. 2; and
Figs. 7A & 7B schematically illustrate the adjustment points for an alternative bicycle rig.
Fig. 8 illustrates a detailed view of a system to adjust the tilt, rise, and lateral placement of the seat of a bicycle.

### DETAILED DESCRIPTION OF THE PREFERRED EMBODIMENTS

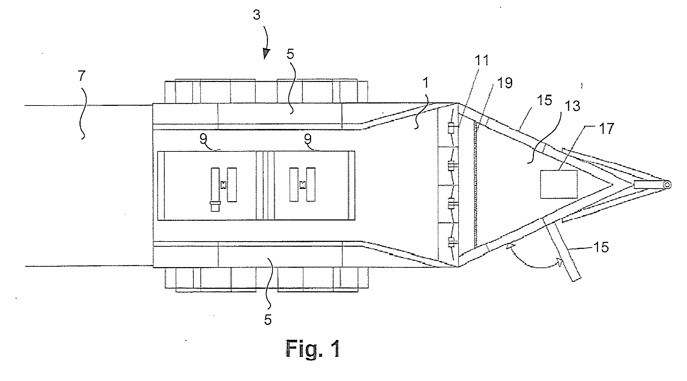

Turning in detail to the drawings, Fig. 1 illustrates a mobile wind tunnel 1 constructed within a trailer 3 configured to be towed by another vehicle. This mobile wind tunnel 1 may be constructed using known techniques, and may include windows 5 as shown. The rear of the trailer 3 includes a fold-down gate 7 for access to the wind tunnel 1. In the down position, this gate 7 forms a ramp, and it is left down during use of the wind tunnel 1. A bike mount platform 9, described in greater detail below, is placed in the interior space of the wind tunnel 1. A bicycle or bicycle rig (not shown) is attached to the platform 9 during the fitting procedure. At the front of the wind tunnel 1 are several fans 11. The specifications for the fans 11 may vary, depending upon the desired wind speed within the tunnel 1. For example, the fans 11 may be selected to generate a wind speed of up to about 50 mph, and more preferably, they may be selected to generate a wind speed of up to 25 mph. The dimensions of the wind tunnel 1 and the fans 11, and thus the resultant wind speed capabilities of the wind tunnel 1, may be selected as a matter of design choice. By way of a simple example, 16 -16" diameter fans from ebm-papst Inc, each generating about 331 CFM airflow, may be used to generate a maximum wind speed of approximately 25 mph in a rectangular wind tunnel which is 72" high by 40" wide .

The fans 11 are positioned in a 4 X 4 array at the front of the mobile wind tunnel 1, separating the wind tunnel 1 from a forward compartment 13 of the trailer 3. The forward compartment 13 includes access doors 15 which may be secured in the open position to allow airflow into the fans 11, an air compressor and wiring distribution center 17 for electricity and electronics for the trailer 3, and a mesh wall 19 as a safety measure separating the bulk of the forward compartment 13 from the screens (not shown). The mesh wall 19 not only protects persons entering the forward compartment 13, but it also keeps debris from flowing through the fans 11 into the wind tunnel 1. Although the wind tunnel 1 is described as being incorporated into a trailer 3, the wind tunnel 1 need not be mobile.

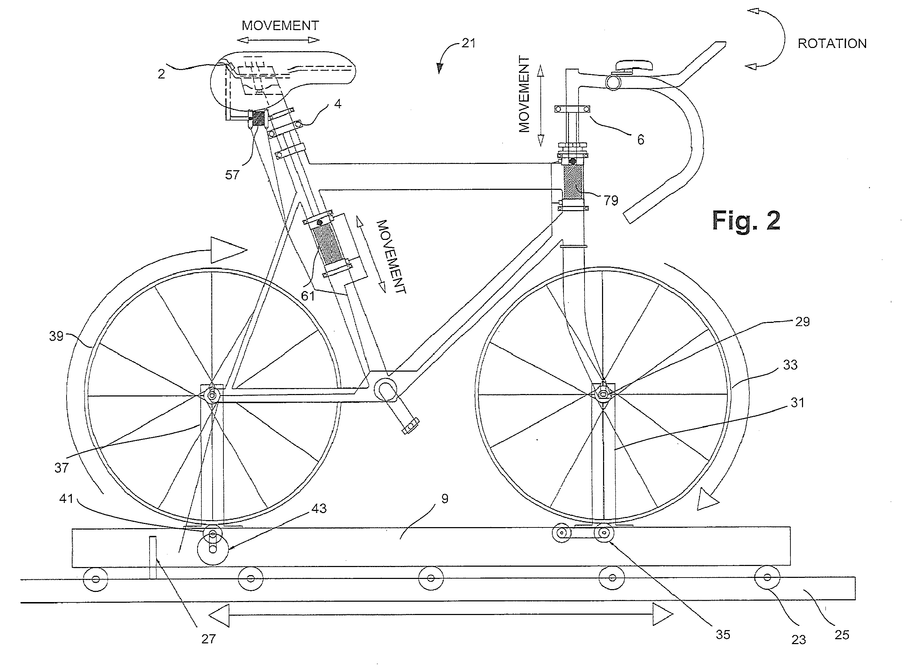

A bicycle rig 21 is shown in Fig. 2 affixed to a bike mount platform 9. The platform 9 itself is disposed on rollers 23, which are disposed in the floor 25 of the wind tunnel 1 in the trailer 3. A load cell 27 is coupled between the floor 25 and the platform 9 to determine a loading force generated when the wind tunnel 1 is active. The load cell 27 is communicably coupled to a processor (not shown) which uses the output of the load cell 27 to measure the wind drag caused by the bicycle rig 21 and the rider. The forks 29 of the bicycle rig 21 are affixed to a front strut 31 extending up from the platform 9, with the front wheel 33 being friction coupled to a front roller 35 disposed within the platform 9. The rear of the bicycle 21 is similarly affixed to a rear strut 37 extending up from the platform 9, with the rear wheel 39 being friction coupled to a rear roller 41 disposed within the platform 9. The rear roller 41 is coupled to a fly wheel 43, which is in turn coupled to a dynamometer (not shown). The processor (not shown) receives output from the dynamometer and uses that output to measure effective speed, watts, and cadence of the rider. The processor is coupled to a controller for the fans (also not shown) so that the wind speed within the wind tunnel 1 may be modified to achieve a specific desired wind speed. The front roller 35, and thus the front wheel 33, is coupled to a motor drive, which drives the front roller 35 so that the front wheel rotational speed matches the measured rotational speed of the rear wheel 39. The motor drive may be controlled by the processor, or alternatively, it may be controlled by a direct link to the dynamometer.

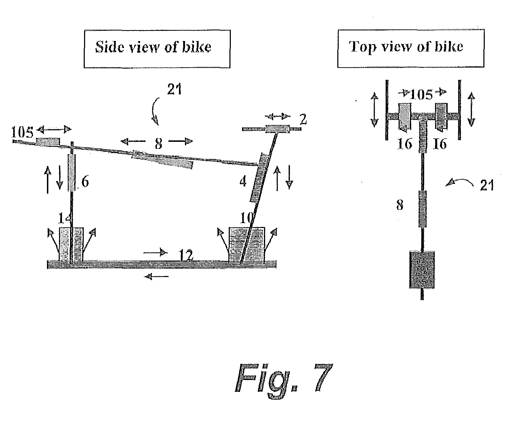

The bicycle rig 21 may be any common bicycle with the adjustment points that are generally found on most bicycles: lateral seat movement forward and rearward; raising and lowering of the seat; raising and lowering of the handle bar; rotational adjustment of the handle bar. Alternatively, the bicycle rig 21 may be a rig which is fabricated specifically for the purpose of the wind tunnel measurements and adjustments described herein. Figs. 7A & 7B illustrate the adjustment points 2, 4, 6, 8, 10, 12, 14, 16, 105 that may be incorporated into such a bicycle rig. Any or all of these adjustment points 2, 4, 6, 8, 10, 12, 14, 16, 105 may be incorporated into the bicycle rig 21. Further, the manner of adjustment may be the same as with a standard bicycle, or alternatively, adjustment mechanisms may be incorporated more fully into the rig 21. As further alternatives, the front and or rear wheels (not shown) of the bicycle rig 21 may be dispensed. However, by not including a rear wheel, an additional mechanism would need to be built into the rig 21 to measure the equivalent ground speed of a rider pedaling on the rig 21. Such modifications are well within the capabilities of those skilled in the art, and as such, are not discussed in further detail.

Returning to Fig. 2, each adjustment point 2, 4, 6 is associated with an actuator in the form of a pneumatic cylinder 57, 61, 79 respectively, which may be actuated using pressurized air to alter the configuration of the bicycle rig 21 at the associated adjustment point 2, 4, 6. Each of these actuators is affixed to the exterior of a standard bicycle, such that the actuator spans the associated adjustment point 2, 4, 6. The bicycle's standard mechanisms for immobilizing the various adjustment points 2, 4, 6 are released, thereby enabling the associated actuator to control and modify the configuration of the bicycle through manipulation of the adjustment point 2, 4, 6.

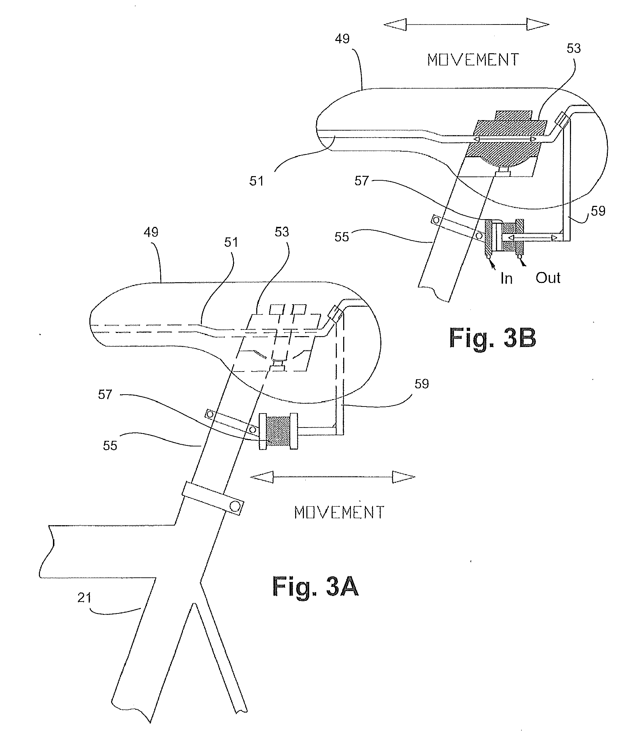

Figs. 3A & 3B illustrate the lateral seat adjustment forward and backward. The seat 49 includes seat rails 51 which are normally secured by a seat clamp 53 at the top of the seat post 55. A pneumatic cylinder 57 is affixed to the seat post 55, and an arm 59 extending from the pneumatic cylinder 57 is affixed (clamping is anticipated to be sufficient, without requiring modification of the standard bicycle or causing damage thereto), depending upon the bicycle) to the seat rails 51, with the orientation of the pneumatic cylinder 57 being in the direction that the seat rails 51 travel within the seat clamp 53, i.e., in the lateral direction of the bicycle rig 21. The pneumatic cylinder 57 includes in and out lines to receive and expel pressurized air to allow actuation of the pneumatic cylinder 57. With the pneumatic cylinder 57 being affixed in this manner, the seat clamp 53 loosened from the seat rails 51 sufficiently to permit the pneumatic cylinder 57 to control the lateral position of the seat 49. The pneumatic cylinder 57 is configured to default toward the fully lateral forward position, so that with the actuator placed, the initial seat position should be set to a position that will allow the pneumatic cylinder 57 to modify the seat position by the maximum travel distance of the pneumatic cylinder 57. A maximum travel distance of a pneumatic cylinder 57 for lateral seat adjustment is estimated at approximately 2 inches. However, the maximum travel distance is essentially a matter of design choice, and may vary based upon the rider and/or the bicycle rig 21.

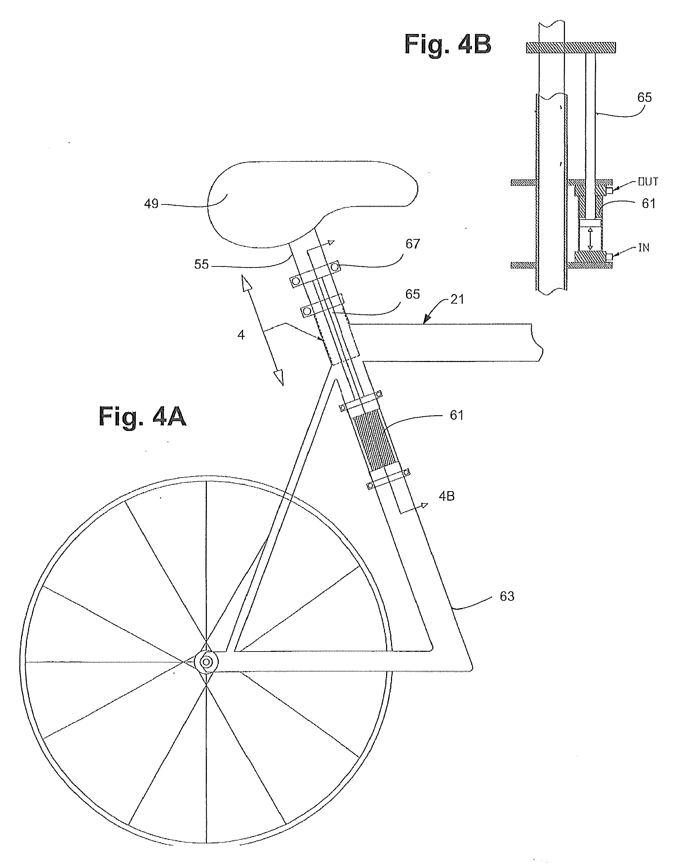

Figs. 4A & 4B illustrate a second actuator set to modify the rise of the seat 49. A pneumatic cylinder 61 is affixed to the rear support 63 of the bicycle rig 21, and an arm 65 extending from the pneumatic cylinder 61 is affixed to the seat post 55, with the orientation of the pneumatic cylinder 61 being in the direction that the seat post 55 travels with respect to the rear support 63. This pneumatic cylinder 61 also includes in and out lines to receive and expel pressurized air to allow actuation of the pneumatic cylinder 61. With the pneumatic cylinder 61 being affixed in this manner and the adjustment point 4 loosened, i.e., the clamp 67 holding the seat post 55 in position is released, the pneumatic cylinder 61 is able to control the rise of the seat 49 with respect to the rear support 63. Again, the pneumatic cylinder 61 is configured to default toward the fully down position, so that that when the pneumatic cylinder 61 is placed, the initial rise of the seat 49 should be set to a position that will allow the pneumatic cylinder 61 to modify the seat rise by the maximum travel distance of the pneumatic cylinder 61. A maximum travel distance of a pneumatic cylinder 61 for lateral seat adjustment is estimated at approximately 4 inches. However, the maximum travel distance is essentially a matter of design choice, and may vary based upon the rider and/or the bicycle rig 21.

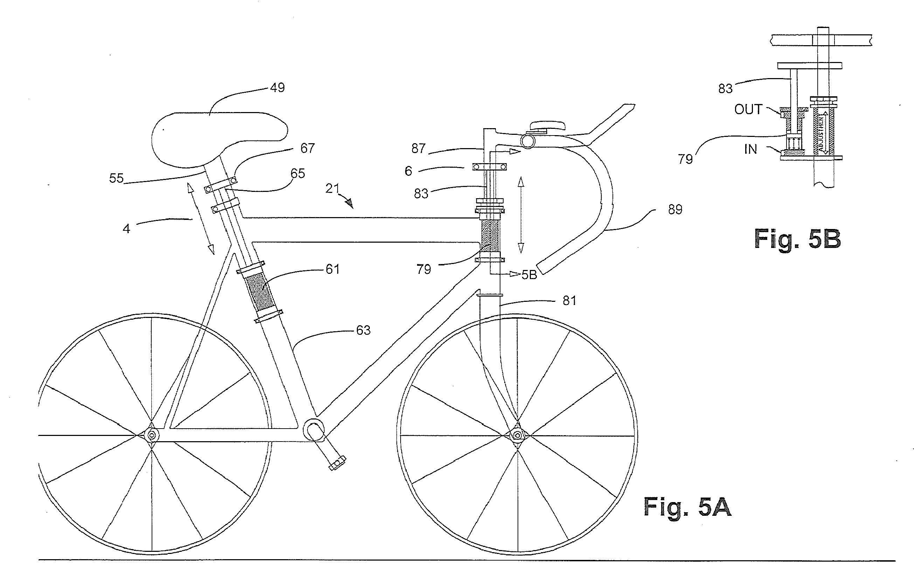

Figs. 5A & 5B illustrate a third actuator set to modify the rise of the handle bar 89. In a manner that is similar to the control of the seat rise, a pneumatic cylinder 79 is affixed to the front support 81 of the bicycle rig 21 with an arm 83 extending from the pneumatic cylinder 79 to the handle bar post 87. The orientation of the pneumatic cylinder 79 is in the direction that the handle bar post 87 travels when raising or lowering the handle bar 89. Affixed in this manner, the pneumatic cylinder 79 is able to control the rise of the handle bar 89 when the adjustment point 6 is loosened. This pneumatic cylinder 79 is also controlled by pressurized air, and may be configured to have a maximum travel distance of up to approximately 6 inches. As before, the maximum travel distance is essentially a matter of design choice, and may vary based upon the rider and/or the bicycle rig 21.

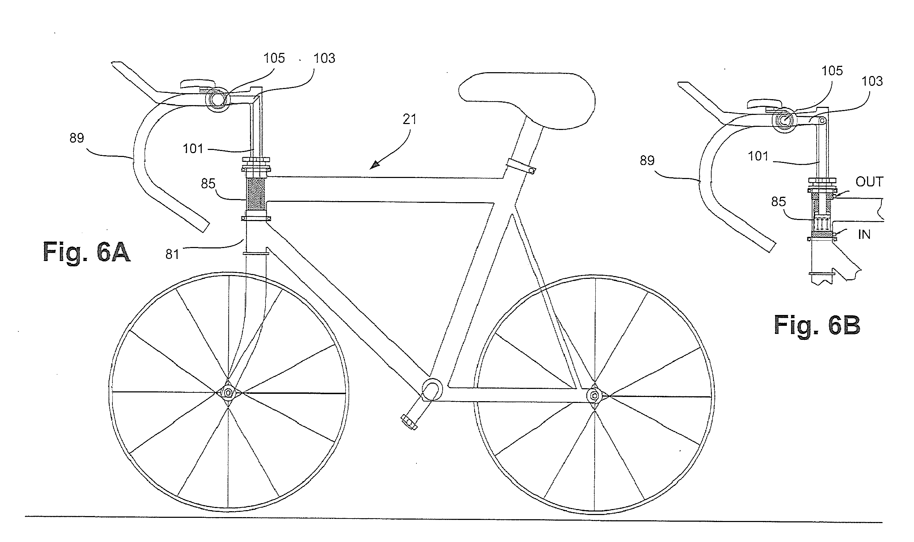

Figs. 6A & 6B illustrate a fourth actuator set to modify the rotation of the handle bar 89 at the point of rotation that is typical for standard racing aero bars. This pneumatic cylinder 85 is also affixed to the front support 81 of the bicycle rig 21, on the opposite side of the frame from the pneumatic cylinder 79 that controls the rise of the handle bar 89. A first arm 101 extends up from the pneumatic cylinder 85 and is pivotally coupled to a second arm 103 which spans across the rotational adjustment point 105 and is rigidly coupled to the handle bar 89. The rigid coupling of this second arm 103 to the handle bar 89, combined with the rotational coupling with the first arm 101, allows the linear movement of the pneumatic cylinder 85 to control the rotational movement of the handle bar 89 when the adjustment point 105 is loosened. Like the other pneumatic cylinders, this pneumatic cylinder 85 is also controlled by pressurized air, and may be configured to provide the handle bar adjustment with a maximum rotation of approximately 45°. Again, the maximum rotation provided by this pneumatic cylinder 85 is essentially a matter of design choice, and may vary based upon the rider and/or the bicycle rig 21.

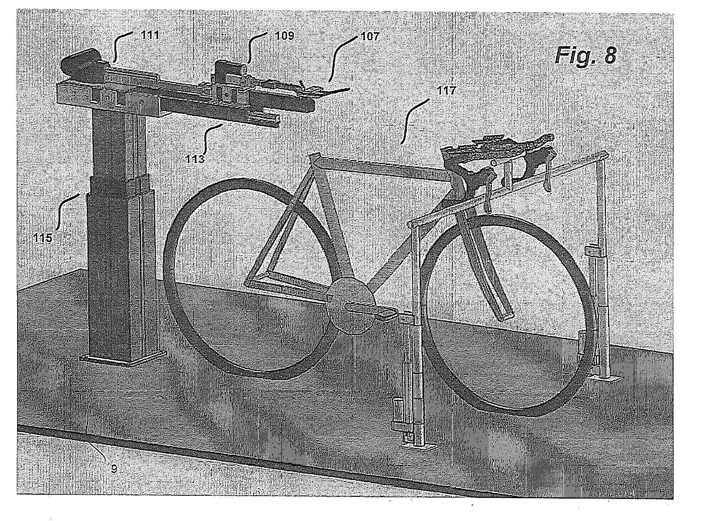

Fig. 8 illustrates an actuator set and pillar to adjust the tilt, rise and lateral placement of the seat of a bicycle 117. The seat (not shown) is secured by a clamp 107 coupled to a tilt actuator 109, which as shown is a pneumatic cylinder. The tilt actuator 109 is attached to a slide actuator 111, which is also shown as a pneumatic cylinder. The slide actuator 111 is attached to a horizontal support beam 113, and the horizontal support beam 113 is mounted on a telescoping pillar 115 which rises from the platform 9. The orientation of both tilt actuator 109 and the slide actuator 111 are in the direction that the seat travels when its lateral placement is adjusted. The tilt actuator 109, when constructed as a pneumatic cylinder, may be actuated using pressurized air to control the tilt of the seat. Similarly, the pneumatic cylinder 111, when constructed as a pneumatic cylinder, may also be actuated using pressurized air to control the lateral placement of the seat. By raising or lowering the telescoping pillar 115, the seat rise may be adjusted.

During operation, the bicycle rig 21 is placed inside the wind tunnel 1 and affixed to the platform 9. The actuators are fixed in position to allow the bicycle rig adjustment mechanisms to be disengaged, while the seat, handle bar, and other adjustments are not altered. The adjustment mechanisms are disengaged in order to allow remote adjustment of the mechanisms by the actuators. The rider then mounts the bicycle rig 21 and rides as the wind tunnel 1 is activated. Through the dynamometer, the processor measures the effective speed of the rider. When the rider's speed is stabilized, load measurements from the load cell 27 are used to measure the wind drag of the rider and bicycle rig 21. This wind drag measurement is shown to an operator on an appropriate display device, such as and LCD display, a computer monitor, and the like. Following initial wind drag measurements, any one or all of the actuators may be used to modify the configuration of the bicycle rig 21 by providing appropriate instructions to the processor. Such instructions may be in the form of a two-way toggle switch coupled to the processor and associated with a specific actuator on the bicycle rig 21. A more complex system may include employing a fully programmable computer as the processor and an automated adjustment system based on pre-programmed criteria. Following a modification to the bicycle rig 21, the rider continues riding and additional load measurements are taken, with additional modifications to the bicycle rig configuration following as needed until both the rider and the operator are satisfied that an appropriately low or minimum wind drag has been achieved. Typically, this fitting process requires less than 30 minutes, and may be as little as 15 minutes.

Since the primary concern is the wind drag caused by the riding position of the rider, the drag caused by the bicycle rig 21 is viewed as effectively being a constant. Further, even though the drag of the bicycle rig 21 may be increased by addition of external actuators, this additional drag is viewed as part of the constant introduced by the bicycle rig 21 and may therefore be ignored when determining the drag introduced by the position of the rider. However, in circumstances where the drag of the bicycle rig 21 is considered non-negligible, the rig may be constructed with internal actuators.

Thus, a system and method for fitting a bicycle to a rider are disclosed. While embodiments of this invention have been shown and described, it will be apparent to those skilled in the art that many more modifications are possible without departing from the inventive concepts herein. The invention, therefore, is not to be restricted except in the spirit of the following claims.

## Claims

1. A bicycle fitting system comprising:
a wind tunnel;
a platform disposed within the wind tunnel;
a bicycle rig coupled to the platform, the bicycle rig including a plurality of adjustment points; and
a plurality of actuators, each adjustment point being associated with one of the actuators, and each actuator being configured to alter a configuration of the bicycle rig, wherein the actuators are configured to alter the configuration of the bicycle rig while a rider is riding the bicycle rig.

2. The bicycle fitting system of claim 1, wherein the platform includes a rear roller, a front strut, and a rear strut, and the bicycle rig is coupled to the front and rear struts, the bicycle rig further including a rear wheel friction coupled to the rear roller.

3. The bicycle fitting system of claim 1 or claim 2, further comprising:
a load cell coupled to the platform; and
a processor configured to receive an output from the load cell and to operate the actuators while the rider is riding the bicycle rig.

4. The bicycle fitting system of any preceding claim, wherein at least one of the actuators is configured to adjust a lateral position of the seat.

5. The bicycle fitting system of any preceding claim, wherein at least one of the actuators is configured to adjust a rise position of the seat.

6. The bicycle fitting system of any preceding claim, wherein at least one of the actuators is configured to adjust a rise position of the handle bar.

7. The bicycle fitting system of any preceding claim, wherein at least one of the actuators is configured to adjust a rotational position of the handle bar.

8. The bicycle fitting system of any preceding claim, wherein at least one of the actuators comprises pneumatic cylinder.

9. The bicycle fitting system of claim any preceding claim, wherein the or a processor is configured to adjust wind velocity in the wind tunnel based on a rotational velocity of the rear wheel.

10. The bicycle fitting system of any preceding claim, wherein the platform further includes a front roller, and the bicycle rig further includes a front wheel, the front wheel being friction coupled to the front roller, and the front roller being configured to rotate based on rotation of the rear roller.

11. The bicycle fitting system of any preceding claim, wherein the bicycle rig comprises a bicycle.

12. A method for fitting a bicycle to a rider, the method comprising:
providing a bicycle rig mounted to a platform in a wind tunnel, wherein a load cell is coupled to the platform, the bicycle rig includes a plurality of adjustment points, a handle bar, a seat, and each adjustment point is associated with an actuator, and each actuator is configured to alter a configuration of the bicycle rig;
activating the wind tunnel to generate a wind stream as the rider rides the bicycle rig, wherein the wind stream is proportional to a rotational speed of the rear wheel;
monitoring an output from the load cell while the rider rides the bicycle rig;
operating one or more of the actuators, in response to the output from the load cell, to alter the configuration of the bicycle rig while the rider rides the bicycle rig.

13. The method of claim 12, wherein the wind stream is proportional to a rotational speed of the rear wheel.
